# EUROPEAN PATENT APPLICATION

(11) **EP 3 972 029 A1**
(43) Date of publication of application: **23.03.2022**
(21) Application number: 20812799.3
(22) Date of filing: 26.02.2020
(51) Int. Cl.: H01M 10/0567, H01M 10/0569

(54) **LITHIUM SECONDARY BATTERY ELECTROLYTE, PREPARATION METHOD THEREFOR AND LITHIUM SECONDARY BATTERY**

(30) Priority: 29.05.2019 CN 201910455873
(71) Applicant: Huawei Technologies Co., Ltd., Longgang District Shenzhen, Guangdong 518129 (CN)
(72) Inventor: MA, Qiang, Shenzhen, Guangdong 518129 (CN); QIN, Dejun, Shenzhen, Guangdong 518129 (CN); DENG, Yaoming, Shenzhen, Guangdong 518129 (CN); LI, Yangxing, Shenzhen, Guangdong 518129 (CN); XU, Fan, Shenzhen, Guangdong 518129 (CN)
(74) Representative: Maiwald Patent- und Rechtsanwaltsgesellschaft mbH
(86) International application number: PCT/CN2020/076844
(87) International publication number: WO 2020/238302

(57) **Abstract**

Embodiments of the present invention provide a lithium secondary battery electrolyte including a lithium salt, an organic solvent, and a flame retardant, and the flame retardant includes (pentafluoro) cyclotriphosphazene substituted by an electron donating group and (pentafluoro) cyclotriphosphazene substituted by an electron withdrawing group. Both two flame retardants: the (pentafluoro) cyclotriphosphazene substituted by the electron donating group and the (pentafluoro) cyclotriphosphazene substituted by the electron withdrawing group are added to the lithium secondary battery electrolyte, so that a battery has both high safety performance and good electrochemical performance. The embodiments of the present invention further provide a preparation method for the lithium secondary battery electrolyte and a lithium secondary battery including the lithium secondary battery electrolyte.

## Description

### TECHNICAL FIELD

Embodiments of the present invention relate to the field of lithium secondary battery technologies, and in particular, to a lithium secondary battery electrolyte, a preparation method thereof, and a lithium secondary battery.

### BACKGROUND

With continuous expansion of functions of electronic consumer products such as mobile phones, digital cameras, and notebook computers, an increasingly high requirement is imposed on energy densities of lithium-ion batteries, and battery safety risks are caused when the energy densities of the batteries increase. At present, a lithium secondary battery electrolyte is mainly a non-aqueous organic electrolyte (which is normally a carbonate electrolyte). When a battery is in an abused (such as thermal shock, overcharge, needle puncture, and external short circuit) state, because the electrolyte has a hidden risk of being volatile, flammable, and the like, thermal runaway of the battery is easily caused, and consequently the battery is prone to a safety risk.

For the foregoing problem that the carbonate electrolyte is flammable, a current mainstream solution is to add flame-retardant additives to a conventional electrolyte. Although there are many types of flame-retardant additives reported, such as phosphorus compounds, halogenated compounds, nitrogen-containing compounds, and silicon compounds, most of the flame-retardant additives have poor compatibility with a positive-electrode material and a negative-electrode material. Even if a phosphazene flame retardant having good compatibility with the positive-electrode material and the negative-electrode material is used, to ensure safety of a battery of a high energy density, a quite high amount of addition (10 wt.%to 20 wt.%) is still required to achieve a good flame-retardant effect. However, addition of a large quantity (>15 wt.%) of single phosphazene flame retardants may cause electrolyte stratification or lithium salt precipitation. This affects electrochemical performance of the battery. To resolve this problem, the phosphazene flame retardant and another non-phosphazene flame retardant are added in combination in the industry to reduce a use quantity of the phosphazene flame retardants. However, the non-phosphazene flame retardant not only has a poor flame-retardant effect, but also has poor compatibility with the positive-electrode material and the negative-electrode material. Consequently, safety performance and electrochemical performance of the battery are affected.

### SUMMARY

In view of this, embodiments of the present invention provide a lithium secondary battery electrolyte. Both two flame retardants: (pentafluoro) cyclotriphosphazene substituted by an electron donating group and (pentafluoro) cyclotriphosphazene substituted by an electron withdrawing group are added to the electrolyte, so that a battery has both high safety performance and good electrochemical performance, to resolve, to a specific extent, an existing problem that addition of a large quantity of phosphazene flame retardants may cause electrolyte stratification or lithium salt precipitation and finally lead to poor electrochemical performance of the battery.

Specifically, a first aspect of the embodiments of the present invention provides a lithium secondary battery electrolyte, including a lithium salt, an organic solvent, and a flame retardant, where the flame retardant includes (pentafluoro) cyclotriphosphazene substituted by an electron donating group and (pentafluoro) cyclotriphosphazene substituted by an electron withdrawing group.

In an implementation of the present invention, the (pentafluoro) cyclotriphosphazene substituted by the electron donating group includes one or more of alkoxy (pentafluoro) cyclotriphosphazene and phenoxy (pentafluoro) cyclotriphosphazene.

In an implementation of the present invention, a quantity of carbon atoms of alkoxy in the alkoxy (pentafluoro) cyclotriphosphazene is 1 to 20.

In an implementation of the present invention, the alkoxy (pentafluoro) cyclotriphosphazene includes one or more of methoxy (pentafluoro) cyclotriphosphazene and ethoxy (pentafluoro) cyclotriphosphazene.

In an implementation of the present invention, the (pentafluoro) cyclotriphosphazene substituted by the electron withdrawing group includes one or more of fluoroalkoxy (pentafluoro) cyclotriphosphazene and alkyl sulfonyl (pentafluoro) cyclotriphosphazene.

In an implementation of the present invention, a quantity of carbon atoms of fluoroalkoxy in the fluoroalkoxy (pentafluoro) cyclotriphosphazene is 1 to 20.

In an implementation of the present invention, the fluoroalkoxy (pentafluoro) cyclotriphosphazene includes one or more of trifluoroethoxy (pentafluoro) cyclotriphosphazene and perfluorobutoxy (pentafluoro) cyclotriphosphazene.

In an implementation of the present invention, a quantity of carbon atoms of alkyl sulfonyl in the alkyl sulfonyl (pentafluoro) cyclotriphosphazene is 1 to 20.

In an implementation of the present invention, the alkyl sulfonyl (pentafluoro) cyclotriphosphazene includes one or more of methyl sulfonyl (pentafluoro) cyclotriphosphazene and ethyl sulfonyl (pentafluoro) cyclotriphosphazene.

In an implementation of the present invention, a mass percentage of the (pentafluoro) cyclotriphosphazene substituted by the electron donating group in the electrolyte is 10% to 30%.

In an implementation of the present invention, a mass percentage of the (pentafluoro) cyclotriphosphazene substituted by the electron withdrawing group in the electrolyte is 1% to 5%.

In an implementation of the present invention, a total mass percentage of the (pentafluoro) cyclotriphosphazene substituted by the electron donating group and the (pentafluoro) cyclotriphosphazene substituted by the electron withdrawing group in the electrolyte is 16% to 30%.

In an implementation of the present invention, the electrolyte further includes another additive, and the another additive includes one or more of biphenyl, fluorobenzene, vinylene carbonate, trifluoromethyl vinylene carbonate, vinyl ethylene carbonate, 1,3-propane sultone, 1,4-butane sultone, vinyl sulfate, ethylene sulfite, succinonitrile, adiponitrile, 1,2-bis (2-cyanoethoxy) ethane, and 1,3,6-hexanetricarbonitrile.

In an implementation of the present invention, a mass percentage of the another additive in the electrolyte is 0.1% to 20%.

In an implementation of the present invention, the lithium salt includes one or more of LiClO₄, LiBF₄, LiPF₆, LiAsF₆, LiPF₂O₂, LiCF₃SO₃, LiTDI, LiB(C₂O₄)₂ (LiBOB), LiBF₂C₂O₄ (LiDFOB), Li[(CF₃SO₂)₂N], Li[(FSO₂)₂N], and Li[(CₘF₂ₘ₊₁SO₂)(CₙF₂ₙ₊₁SO₂)N], where m and n are natural numbers.

In an implementation of the present invention, a molarity of the lithium salt in the electrolyte is 0.01 mol/L to 2.0 mol/L.

In an implementation of the present invention, the organic solvent includes a carbonate solvent and/or a carboxylate solvent.

In an implementation of the present invention, the carbonate solvent is a mixed solvent including cyclic carbonate and chain carbonate.

In an implementation of the present invention, the cyclic carbonate includes one or more of ethylene carbonate (EC), propylene carbonate (PC), fluoroethylene carbonate (FEC), gamma-butyrolactone (GBL), and butyl carbonate (BC), and the chain carbonate includes one or more of dimethyl carbonate (DMC), ethyl methyl carbonate (EMC), diethyl carbonate (DEC), and dipropyl carbonate (DPC).

In an implementation of the present invention, a mass percentage of the cyclic carbonate in the electrolyte is 5% to 70%, and a mass percentage of the chain carbonate in the electrolyte is 5% to 70%.

In an implementation of the present invention, the carboxylate solvent includes one or more of methyl acetate (MA), ethyl acetate (EA), propyl acetate, butyl acetate, propyl propionate (PP), and butyl propionate, and a mass percentage of the carboxylate solvent in the electrolyte is 5% to 30%.

According to the lithium secondary battery electrolyte provided in the first aspect of the embodiments of the present invention, two flame retardants: the (pentafluoro) cyclotriphosphazene substituted by the electron donating group and the (pentafluoro) cyclotriphosphazene substituted by the electron withdrawing group are added to the electrolyte. In this way, solubility of a phosphazene flame retardant in the electrolyte is further improved under synergistic action of the two flame retardants, a problem of electrolyte stratification or lithium salt precipitation is better overcome, and electrochemical performance and safety performance of the battery are ensured.

According to a second aspect, an embodiment of the present invention further provides a preparation method for a lithium secondary battery electrolyte, including the following steps:
in an argon-filled glove box, dissolving a fully dried lithium salt in an organic solvent, stirring and mixing the lithium salt and the organic solvent to form a homogeneous solution, adding, to the homogeneous solution, (pentafluoro) cyclotriphosphazene substituted by an electron donating group and (pentafluoro) cyclotriphosphazene substituted by an electron withdrawing group, and mixing the (pentafluoro) cyclotriphosphazene substituted by the electron donating group, the (pentafluoro) cyclotriphosphazene substituted by the electron withdrawing group, and the homogeneous solution homogeneously to obtain the lithium secondary battery electrolyte.

According to the preparation method provided in the second aspect of the embodiments of the present invention, a process is simple, and the method is applicable to industrial production.

According to a third aspect, an embodiment of the present invention further provides a lithium secondary battery, including a positive electrode, a negative electrode, a diaphragm, and an electrolyte, where the electrolyte is the lithium secondary battery electrolyte according to the first aspect of the present invention.

### BRIEF DESCRIPTION OF DRAWINGS

FIG. 1 shows a photo of a lithium secondary battery electrolyte prepared in Embodiment 1 of the present invention;
FIG. 2 shows a photo of a lithium secondary battery electrolyte prepared in Comparative Example 1 of the present invention;
FIG. 3 shows a photo of a lithium secondary battery electrolyte prepared in Comparative Example 2 of the present invention; and
FIG. 4 is a cyclic performance diagram of lithium secondary batteries in Embodiment 1 and Embodiment 2 and Comparative Example 1 and Comparative Example 2 of the present invention at room temperature.

### DESCRIPTION OF EMBODIMENTS

The following describes the embodiments of the present invention with reference to the accompanying drawings in the embodiments of the present invention.

To improve safety performance of lithium-ion batteries, a flame retardant is added to a conventional electrolyte in the industry. A phosphazene flame retardant is brought into focus due to good compatibility with a positive-electrode material and a negative-electrode material and better flame-retardant performance. However, to ensure safety of a battery of a high energy density, a quite high addition amount (10 wt.% to 20 wt.%) is required to achieve a good flame-retardant effect. However, addition of a large quantity of single phosphazene flame retardants may cause electrolyte stratification or lithium salt precipitation. This affects electrochemical performance of the battery. To resolve this problem, the phosphazene flame retardant and another non-phosphazene flame retardant are added in combination in the industry to reduce a use quantity of the phosphazene flame retardants. However, the non-phosphazene flame retardant not only has a poor flame-retardant effect, but also has poor compatibility with the positive-electrode material and the negative-electrode material. Consequently, safety performance and electrochemical performance of the battery are affected. In view of this, an embodiment of the present invention provides a lithium secondary battery electrolyte. Both two flame retardants: (pentafluoro) cyclotriphosphazene substituted by an electron donating group and (pentafluoro) cyclotriphosphazene substituted by an electron withdrawing group are added to the electrolyte, so that a battery has both high safety performance and good electrochemical performance.

Specifically, an embodiment of the present invention provides a lithium secondary battery electrolyte, including a lithium salt, an organic solvent, and a flame retardant, where the flame retardant includes (pentafluoro) cyclotriphosphazene substituted by an electron donating group and (pentafluoro) cyclotriphosphazene substituted by an electron withdrawing group.

In the lithium secondary battery electrolyte in this embodiment of the present invention, two types of phosphazene flame retardants with similar structures are added to a conventional electrolyte, and the following beneficial effects are achieved under synergistic action of the two types of phosphazene flame retardants: (1) Because the two types of flame retardants are different in polarity and solubility, existence of the (pentafluoro) cyclotriphosphazene substituted by the electron withdrawing group can break a saturation solubility limit of the (pentafluoro) cyclotriphosphazene substituted by the electron donating group in the electrolyte, increase a total use quantity of phosphazene flame retardants, avoid electrolyte stratification or lithium salt precipitation, improve flame resistance of the electrolyte, and effectively ensure safety of a battery. (2) Based on mixture of the two types of phosphazene flame retardants that are different in polarity, a use amount of the (pentafluoro) cyclotriphosphazene substituted by the electron withdrawing group can be well controlled. This can avoid excessively large battery impedance caused when a large amount of (pentafluoro) cyclotriphosphazene substituted by the electron withdrawing group is reduced to a film on a negative electrode, and can improve a high-voltage capability of the electrolyte, effectively restrain oxidative decomposition caused when the electrolyte is in contact with a positive-electrode material at a high voltage, and improve high-voltage cycle performance of the battery. (3) The two types of flame retardants are similar in structure, so that a problem of poor compatibility between different flame retardants can be effectively avoided, and good electrochemical performance of the battery can be ensured.

In an implementation of the present invention, both a structural formula of the (pentafluoro) cyclotriphosphazene substituted by the electron donating group and a structural formula of the (pentafluoro) cyclotriphosphazene substituted by the electron withdrawing group may be represented by a structural formula shown in formula (I):

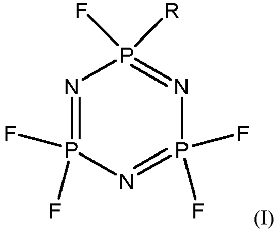

When R is an electron donating group, R is the (pentafluoro) cyclotriphosphazene substituted by the electron donating group. When R is an electron withdrawing group, R is the (pentafluoro) cyclotriphosphazene substituted by the electron withdrawing group.

In some embodiments of the present invention, the electron donating group may be alkoxy or phenoxy. In other words, the (pentafluoro) cyclotriphosphazene substituted by the electron donating group includes one or more of alkoxy (pentafluoro) cyclotriphosphazene and phenoxy (pentafluoro) cyclotriphosphazene. In some other embodiments, the electron donating group may alternatively be another electron donating group that can be bonded with a phosphorus atom in cyclotriphosphazene. In some embodiments of the present invention, a quantity of carbon atoms in the alkoxy may be 1 to 20. Further, the quantity of carbon atoms in the alkoxy may be 1 to 10. Even further, the quantity of carbon atoms in the alkoxy may be 2 to 6. The alkoxy may be a linear chain or a branched chain. In some specific embodiments, the alkoxy (pentafluoro) cyclotriphosphazene may include one or more of methoxy (pentafluoro) cyclotriphosphazene and ethoxy (pentafluoro) cyclotriphosphazene.

In some embodiments of the present invention, the electron withdrawing group may be fluoroalkoxy or alkyl sulfonyl. In other words, the (pentafluoro) cyclotriphosphazene substituted by the electron withdrawing group includes one or more of fluoroalkoxy (pentafluoro) cyclotriphosphazene and alkyl sulfonyl (pentafluoro) cyclotriphosphazene. In some other embodiments, the electron withdrawing group may alternatively be another electron withdrawing group that can be bonded with the phosphorus atom in the cyclotriphosphazene.

In some embodiments of the present invention, a quantity of carbon atoms in the fluoroalkoxy may be 1 to 20. Further, the quantity of carbon atoms in the fluoroalkoxy may be 1 to 10. Even further, the quantity of carbon atoms in the fluoroalkoxy may be 2 to 6. In an implementation of the present invention, the fluoroalkoxy may be perfluoroalkoxy or partial fluoroalkoxy. The fluoroalkoxy may be a linear chain or a branched chain. In some specific embodiments, the fluoroalkoxy (pentafluoro) cyclotriphosphazene includes one or more of trifluoroethoxy (pentafluoro) cyclotriphosphazene and perfluorobutoxy (pentafluoro) cyclotriphosphazene.

In some embodiments of the present invention, a quantity of carbon atoms in alkyl sulfonyl is 1 to 20. Further, the quantity of carbon atoms in the alkyl sulfonyl may be 1 to 10. Even further, the quantity of carbon atoms in the alkyl sulfonyl may be 2 to 6. The alkyl sulfonyl may be a linear chain or a branched chain. In some specific embodiments, the alkyl sulfonyl (pentafluoro) cyclotriphosphazene includes one or more of methyl sulfonyl (pentafluoro) cyclotriphosphazene and ethyl sulfonyl (pentafluoro) cyclotriphosphazene.

In an implementation of the present invention, a mass percentage of the (pentafluoro) cyclotriphosphazene substituted by the electron donating group in the electrolyte may be 10% to 30%. Further, the mass percentage of the (pentafluoro) cyclotriphosphazene substituted by the electron donating group in the electrolyte may be 15% to 25%.

In an implementation of the present invention, a mass percentage of the (pentafluoro) cyclotriphosphazene substituted by the electron withdrawing group in the electrolyte is 1% to 5%. Addition of the (pentafluoro) cyclotriphosphazene substituted by the electron withdrawing group can effectively improve a total use quantity of phosphazene flame retardants and improve flame-retardant performance of the electrolyte. In addition, when the (pentafluoro) cyclotriphosphazene substituted by the electron withdrawing group is controlled within a relatively small addition amount, excessively large battery impedance caused when a large amount of (pentafluoro) cyclotriphosphazene substituted by the electron withdrawing group is reduced to a film on a negative electrode can be avoided, and a high-voltage capability of the electrolyte can be improved, oxidative decomposition caused when the electrolyte is in contact with a positive-electrode material at a high voltage can be effectively restrained, and high-voltage cycle performance of the battery can be improved.

In an implementation of the present invention, a total mass percentage of the (pentafluoro) cyclotriphosphazene substituted by the electron donating group and the (pentafluoro) cyclotriphosphazene substituted by the electron withdrawing group in the electrolyte is 11% to 35%; may further be 16% to 30%; and may even further be 20% to 25%.

In an implementation of the present invention, the electrolyte may further include another additive based on an actual requirement. Specifically, the another additive may include one or more of a film forming additive, a high-voltage additive, an overcharging prevention additive, or an interface wetting agent. The film forming additive may be but is not limited to vinylene carbonate, trifluoromethyl vinylene carbonate, vinyl ethylene carbonate, 1,3-propane sultone, 1,4-butane sultone, vinyl sulfate, and ethylene sulfite, and the high-voltage additive may be but is not limited to one or more of succinonitrile, adiponitrile, 1,2-bis (2-cyanoethoxy) ethane, and 1,3,6-hexanetricarbonitrile. The overcharging prevention additive may be, for example, biphenyl, and the interface wetting agent may be, for example, fluorobenzene. A mass percentage of the another additive in the electrolyte may be 0.1% to 20%, and may further be 0.5% to 10%.

In an implementation of the present invention, the lithium salt may be an existing common conductive lithium salt, and may specifically include one or more of LiClO₄, LiBF₄, LiPF₆, LiAsF₆, LiPF₂O₂, LiCF₃SO₃, LiTDI, LiB(C₂O₄)₂ (LiBOB), LiBF₂C₂O₄ (LiDFOB), Li[(CF₃SO₂)₂N], Li[(FSO₂)₂N], and Li[(CₘF₂ₘ₊₁SO₂)(CₙF₂ₙ₊₁SO₂)N], and m and n are natural numbers. In some embodiments of the present invention, a molarity of the lithium salt in the electrolyte may be 0.01 mol/L to 2.0 mol/L.

In an implementation of the present invention, to cooperate with dissolution of a large quantity of added flame retardants, a carbonate solvent and/or a carboxylate solvent may be selected as the organic solvent. The carbonate solvent may be a mixed solvent including cyclic carbonate and chain carbonate. Specifically, the cyclic carbonate may include one or more of ethylene carbonate (EC), propylene carbonate (PC), fluoroethylene carbonate (FEC), gamma-butyrolactone (GBL), and butyl carbonate (BC), and the chain carbonate may include one or more of dimethyl carbonate (DMC), ethyl methyl carbonate (EMC), diethyl carbonate (DEC), and dipropyl carbonate (DPC).

In some embodiments of the present invention, a mass percentage of the cyclic carbonate in the electrolyte may be 5% to 70%, and a mass percentage of the chain carbonate in the electrolyte may be 5% to 70%.

In an implementation of the present invention, the carboxylate solvent may include one or more of methyl acetate (MA), ethyl acetate (EA), propyl acetate, butyl acetate, propyl propionate (PP), and butyl propionate, and a mass percentage of the carboxylate solvent in the electrolyte may be 5% to 30%.

According to the lithium secondary battery electrolyte provided in this embodiment of the present invention, two types of phosphazene flame retardants that are different in polarity and similar in structure are added to the electrolyte, so that a total use quantity of phosphazene flame retardants is increased. In this way, the battery has high safety performance, and electrochemical performance of the battery is effectively ensured. In addition, the two types of phosphazene flame retardants have good compatibility with a positive-electrode material and a negative-electrode material, and other performance (such as low temperature performance and rate performance) of the battery is not deteriorated. Therefore, the lithium secondary battery electrolyte has a broader application prospect.

Correspondingly, an embodiment of the present invention further provides a preparation method for the foregoing lithium secondary battery electrolyte, and the method includes the following steps:

In an argon-filled glove box, a fully dried lithium salt is dissolved in an organic solvent, the lithium salt and the organic solvent are stirred and mixed to form a homogeneous solution, (pentafluoro) cyclotriphosphazene substituted by an electron donating group and (pentafluoro) cyclotriphosphazene substituted by an electron withdrawing group are added to the homogeneous solution, and the (pentafluoro) cyclotriphosphazene substituted by the electron donating group, the (pentafluoro) cyclotriphosphazene substituted by the electron withdrawing group, and the homogeneous solution are mixed homogeneously to obtain the lithium secondary battery electrolyte.

According to the preparation method provided in this embodiment of the present invention, a process is simple, and the method is applicable to industrial production.

An embodiment of the present invention further provides a lithium secondary battery including a positive electrode, a negative electrode, a diaphragm, and an electrolyte, and the electrolyte is the lithium secondary battery electrolyte according to the embodiments of the present invention. According to the lithium secondary battery provided in this embodiment of the present invention, because a relatively large quantity of phosphazene flame retardants are added to an electrolyte of the lithium secondary battery, and the phosphazene flame retardant has good compatibility with a positive-electrode material and a negative-electrode material and good flame retardant performance, the battery has excellent safety performance and electrochemical performance.

The following uses a plurality of embodiments to further describe the embodiments of the present invention.

### Embodiment 1

A lithium secondary battery electrolyte includes lithium salts (LiPF₆ and LiDFOB), a non-aqueous organic solvent formed by mixing EC, DEC, PC, FEC, and PP in a weight ratio of 25:20:25:5:15, and flame retardants: ethoxy (pentafluoro) cyclotriphosphazene and trifluoroethoxy (pentafluoro) cyclotriphosphazene. Concentration of LiPF₆ is 1.0 mol/L, concentration of LiDFOB is 0.05 mol/L, and a mass percentage of the ethoxy (pentafluoro) cyclotriphosphazene and a mass percentage of the trifluoroethoxy (pentafluoro) cyclotriphosphazene are respectively 15% and 2%.

Preparation of the lithium secondary battery electrolyte in this embodiment is as follows:

In an argon-filled glove box, EC, DEC, PC, FEC, and PP are mixed to form an organic solvent, and then fully dried LiPF₆ and LiDFOB are dissolved in the solvent; then, LiPF₆, LiDFOB, and the solvent are stirred and mixed to form a homogeneous solution; the ethoxy (pentafluoro) cyclotriphosphazene and the trifluoroethoxy (pentafluoro) cyclotriphosphazene are added to the homogeneous solution; and then the ethoxy (pentafluoro) cyclotriphosphazene, the trifluoroethoxy (pentafluoro) cyclotriphosphazene, and the homogeneous solution are mixed homogeneously to obtain the lithium secondary battery electrolyte in Embodiment 1 of the present invention.

Preparation of a lithium secondary battery is as follows:

Polyvinylidene fluoride (PVDF) with a mass percentage of 2%, a conductive agent super P with a mass percentage of 2%, and lithium cobalt oxide (LiCoO₂) with a mass percentage of 96% are obtained through weighing and added to N-methylpyrrolidone (NMP) in sequence, and are fully stirred and mixed homogeneously to obtain slurry. The slurry is coated on an aluminum foil current collector, and is dried, cold pressed, and cut to obtain a positive electrode plate.

CMC with a mass percentage of 1.5%, SBR with a mass percentage of 2.5%, acetylene black with a mass percentage of 1%, and graphite with a mass percentage of 95% are obtained through weighing and added to deionized water in sequence, and are fully stirred and mixed homogeneously to obtain slurry. The slurry is coated on a copper foil current collector, and is dried, cold pressed, and cut to obtain a negative electrode plate.

The foregoing prepared positive electrode plate and negative electrode plate, and a commercial PP/PE/PP three-layer diaphragm are made into an electrochemical cell, packaged by using a polymer, poured into the lithium secondary battery electrolyte prepared in Embodiment 1 of the present invention, and converted into a 3.8 Ah soft-pack lithium secondary battery through a formation process and the like.

### Embodiment 2

A lithium secondary battery electrolyte includes lithium salts (LiPF₆ and LiDFOB), a non-aqueous organic solvent formed by mixing EC, DEC, PC, FEC, and PP in a weight ratio of 25:20:25:5:15, and flame retardants: ethoxy (pentafluoro) cyclotriphosphazene and methyl sulfonyl (pentafluoro) cyclotriphosphazene. Concentration of LiPF₆ is 1.0 mol/L, concentration of LiDFOB is 0.05 mol/L, and a mass percentage of the ethoxy (pentafluoro) cyclotriphosphazene and a mass percentage of the methyl sulfonyl (pentafluoro) cyclotriphosphazene are respectively 15% and 2%.

Preparation of the lithium secondary battery electrolyte in this embodiment is as follows:

In an argon-filled glove box, EC, DEC, PC, FEC, and PP are mixed to form an organic solvent, and then fully dried LiPF₆ and LiDFOB are dissolved in the solvent; then, LiPF₆, LiDFOB, and the solvent are stirred and mixed to form a homogeneous solution; the ethoxy (pentafluoro) cyclotriphosphazene and the methyl sulfonyl

(pentafluoro) cyclotriphosphazene are added to the homogeneous solution; and then the ethoxy (pentafluoro) cyclotriphosphazene, the methyl sulfonyl (pentafluoro) cyclotriphosphazene, and the homogeneous solution are mixed homogeneously to obtain the lithium secondary battery electrolyte in Embodiment 2 of the present invention.

Preparation of a lithium secondary battery is the same as that in Embodiment 1.

### Embodiment 3

A lithium secondary battery electrolyte includes lithium salts (LiPF₆ and LiDFOB), a non-aqueous organic solvent formed by mixing EC, DEC, PC, FEC, and PP in a weight ratio of 25:20:25:5:15, and flame retardants: ethoxy (pentafluoro) cyclotriphosphazene, trifluoroethoxy (pentafluoro) cyclotriphosphazene, and methyl sulfonyl (pentafluoro) cyclotriphosphazene. Concentration of LiPF₆ is 1.0 mol/L, concentration of LiDFOB is 0.05 mol/L, and a mass percentage of the ethoxy (pentafluoro) cyclotriphosphazene, a mass percentage of the trifluoroethoxy (pentafluoro) cyclotriphosphazene, and a mass percentage of the methyl sulfonyl (pentafluoro) cyclotriphosphazene are respectively 15%, 1%, and 1%.

Preparation of the lithium secondary battery electrolyte in this embodiment is as follows:

In an argon-filled glove box, EC, DEC, PC, FEC, and PP are mixed to form an organic solvent, and then fully dried LiPF₆ and LiDFOB are dissolved in the solvent; then, LiPF₆, LiDFOB, and the solvent are stirred and mixed to form a homogeneous solution; the ethoxy (pentafluoro) cyclotriphosphazene, the trifluoroethoxy (pentafluoro) cyclotriphosphazene, and the methyl sulfonyl (pentafluoro) cyclotriphosphazene are added to the solution; and then the ethoxy (pentafluoro) cyclotriphosphazene, the trifluoroethoxy (pentafluoro) cyclotriphosphazene, the methyl sulfonyl (pentafluoro) cyclotriphosphazene, and the solution are mixed homogeneously to obtain the lithium secondary battery electrolyte in Embodiment 3 of the present invention.

Preparation of a lithium secondary battery is the same as that in Embodiment 1.

### Comparative Example 1

In an argon-filled glove box, EC, DEC, PC, FEC, and PP are mixed to form an organic solvent, and then fully dried LiPF₆ and LiDFOB are dissolved in the solvent, and the LiPF₆, the LiDFOB, and the solvent are stirred and mixed homogeneously to obtain an electrolyte in Comparative Example 1 of the present invention. Concentration of LiPF₆ is 1.0 mol/L, concentration of LiDFOB is 0.05 mol/L, and mass percentages of EC, DEC, PC, FEC, and PP are respectively 25:20:25:5:15. Preparation of a lithium secondary battery is the same as that in Embodiment 1.

### Comparative Example 2

In an argon-filled glove box, EC, DEC, PC, FEC, and PP are mixed to form an organic solvent, and then fully dried LiPF₆ and LiDFOB are dissolved in the solvent, and the LiPF₆, the LiDFOB, and the solvent are stirred and mixed homogeneously to form a homogeneous solution; and then ethoxy (pentafluoro) cyclotriphosphazene is added to the solution, and the ethoxy (pentafluoro) cyclotriphosphazene and the solution are fully mixed to obtain an electrolyte in Comparative Example 2 of the present invention. Concentration of LiPF₆ is 1.0 mol/L, concentration of LiDFOB is 0.05 mol/L, mass percentages of EC, DEC, PC, FEC, and PP are respectively 25:20:25:5:15, and a mass percentage of the ethoxy (pentafluoro) cyclotriphosphazene is 17%. Preparation of a lithium secondary battery is the same as that in Embodiment 1.

The following tests are performed on the electrolytes and the lithium secondary batteries in Embodiment 1 to Embodiment 3 and Comparative Example 1 and Comparative Example 2 of the present invention.

### (1) Test on viscosity and conductivity of the electrolyte

A rotary viscometer is used to test the viscosity of the electrolyte. An electrolyte sample of 0.5 mL to 1 mL is placed on a sample stage of the viscometer. A test condition is 25°C, a measurement range of a rotor is 1 mPa/s to 100 mPa/s, a measurement rotation speed is 50 rpm, and viscosity of each electrolyte sample is tested three times and an average value is calculated. A conductivity meter is used to test the conductivity of the electrolyte. An electrolyte sample of 1 mL to 5 mL is placed in a test tube of the conductivity meter. Test temperature is 25°C, and conductivity of each electrolyte sample is tested three times and an average value is calculated.

### (2) Test on self-extinguishing performance of the electrolyte

An electrolyte of 1.0 g is placed in a crucible of 5.0 mL, and the electrolyte is ignited to test self-extinguishing time of the electrolyte. The electrolyte is quickly ignited by using an ignition apparatus, and time from a time point at which the ignition apparatus is removed to a time point at which flame spontaneously extinguishes, namely, self-extinguishing time (SET), is recorded. SET of each type of electrolyte sample is tested five times, and an average value is calculated. Flame-retardant performance of different electrolytes is compared by using self-extinguishing time of an electrolyte of unit mass as a standard.

### (3) Test on performance of the lithium secondary battery

Charge/discharge cycle test is performed on the battery at a charge/discharge ratio of 0.7/0.7 C. A voltage range of a graphite/LiCoO₂ battery is 3.0 V to 4.5 V A capacity retention rate after 200 cycles is recorded.

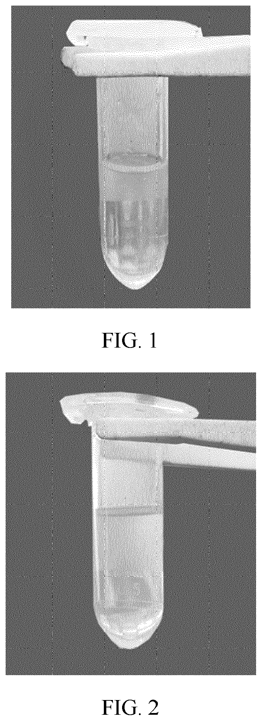

Results of the foregoing tests in Embodiment 1 to Embodiment 3 and Comparative Example 1 and Comparative Example 2 are shown in Table 1, FIG. 1, FIG. 2, FIG. 3, and FIG. 4.

**Table 1 Test results in Embodiment 1 to Embodiment 3 and Comparative Example 1 and Comparative Example 2**

| | Phosphazene flame retardant | Compatibility | Viscosity (mPa/s) | Conductivity (mS/cm) | SET (s) | Capacity retention rate after 200 cycles |
|---|---|---|---|---|---|---|
| Embodim ent 1 | Ethoxy (pentafluoro) cyclotriphosphazene + trifluoroethoxy (pentafluoro) cyclotriphosphazene | Clear, transparent, and homogeneous | 2.49 | 6.35 | 0 | 91% |
| Embodim ent 2 | Ethoxy (pentafluoro) cyclotriphosphazene + methyl sulfonyl (pentafluoro) cyclotriphosphazene | Clear, transparent, and homogeneous | 2.53 | 6.26 | 0 | 87% |
| Embodim ent 3 | Ethoxy (pentafluoro) cyclotriphosphazene + trifluoroethoxy (pentafluoro) cyclotriphosphazene + methyl sulfonyl (pentafluoro) cyclotriphosphazene | Clear, transparent, and homogeneous | 2.51 | 6.32 | 0 | 89% |
| Comparati ve Example 1 | / | Clear, transparent, and homogeneous | 1.16 | 7.64 | 18 | 59% |
| Comparati ve Example 2 | Ethoxy (pentafluoro) cyclotriphosphazene | Turbid and lithium salt precipitation | 5.58 | 5.48 | 0 | 73% |

It can be learned from Table 1 that, compared with Comparative Example 1, the electrolytes in Embodiment 1 to Embodiment 3 and Comparative Example 2 have excellent flame resistance. This is mainly because the electrolytes in Embodiment 1 to Embodiment 3 and Comparative Example 2 include a phosphazene flame retardant with a highly efficient flame resistance characteristic. When the electrolyte is heated, a phosphazene group in the electrolyte is decomposed to produce P-series radicals to capture H or OH radicals generated when the electrolyte is decomposed after being heated, and a chain reaction is cut off, so that flame resistance of the electrolyte is improved. In addition, it can be seen that, although introduction of the phosphazene flame retardant in Embodiment 1 to Embodiment 3 increases viscosity of the electrolyte and reduces conductivity of the electrolyte, compared with Comparative Example 2, it can be learned that combination of two types of phosphazene flame retardants has less influence on the viscosity and the conductivity of the electrolyte, because both the two types of the flame retardants are phosphazene compounds that are similar in structure, so that a problem of poor compatibility between different additives can be effectively avoided, and synergistic action of (pentafluoro) cyclotriphosphazene substituted by an electron donating group and (pentafluoro) cyclotriphosphazene substituted by an electron withdrawing group can further improve a total use quantity of phosphazene flame retardants, without causing a phenomenon of electrolyte stratification or lithium salt precipitation.

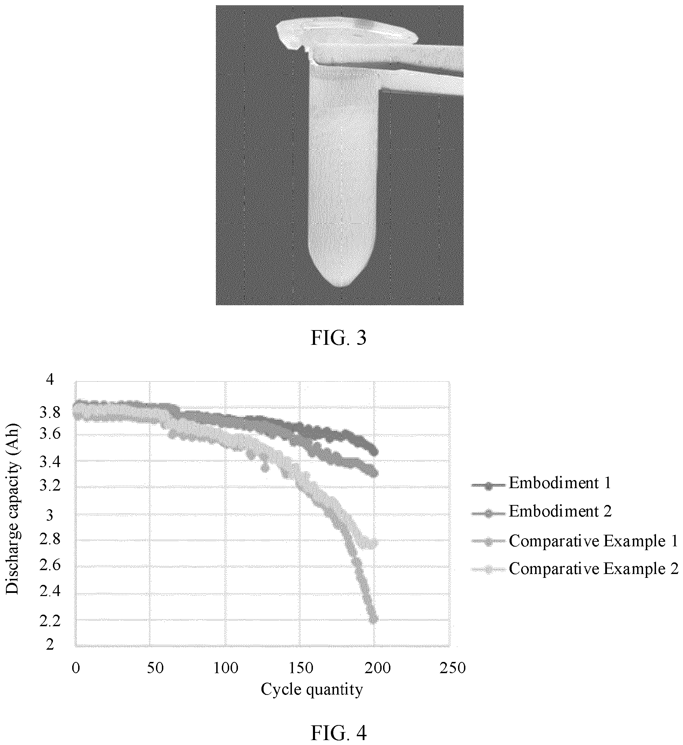

In addition, FIG. 1, FIG. 2, and FIG. 3 show respectively photos of electrolytes in Embodiment 1, Comparative Example 1, and Comparative Example 2. It can be seen from Table 1, FIG. 1, FIG. 2, and FIG. 3 that the electrolytes prepared in Embodiment 1 to Embodiment 3 are in a clear, transparent, and homogeneous state, but the electrolyte prepared in Comparative Example 2 is turbid and a small quantity of lithium salts precipitates from the bottom, and this is mainly because a use amount of ethoxy (pentafluoro) cyclotriphosphazene reaches an upper limit in the electrolyte. In Embodiment 1 of the present invention, both the ethoxy (pentafluoro) cyclotriphosphazene and the trifluoroethoxy (pentafluoro) cyclotriphosphazene are introduced, so that a use amount limit of single ethoxy (pentafluoro) cyclotriphosphazene is effectively avoided. In addition, it can also be seen from FIG. 4 that, compared with Comparative Example 1 and Comparative Example 2, the batteries in Embodiment 1 and Embodiment 2 have better high-voltage cycle performance, and the batteries exhibit higher capacity retention rates after 200 cycles, and this is mainly attributed to introduction of an appropriate amount of (pentafluoro) cyclotriphosphazene substituted by an electron withdrawing group. In this way, not only a high-voltage capability of the electrolyte is improved, but the electron withdrawing group (for example, trifluoroethoxy or methyl sulfonyl) can also form a compact interface film on a surface of a positive-electrode material of the battery in a high-voltage condition, to effectively restrain oxidative decomposition caused when the electrolyte is in direct contact with the positive-electrode material at a high voltage, avoid serious side reactions, and improve high-voltage cycle performance of the battery. Therefore, the lithium secondary battery electrolyte provided in this embodiment of the present invention not only resolves a problem of a use amount limit of single phosphazene flame retardants and avoid a problem of poor compatibility with the electrolyte, but also effectively ensures electrochemical performance and safety performance of the battery.

## Claims

1. A lithium secondary battery electrolyte, comprising a lithium salt, an organic solvent, and a flame retardant, wherein the flame retardant comprises (pentafluoro) cyclotriphosphazene substituted by an electron donating group and (pentafluoro) cyclotriphosphazene substituted by an electron withdrawing group.

2. The lithium secondary battery electrolyte according to claim 1, wherein the (pentafluoro) cyclotriphosphazene substituted by the electron donating group comprises one or more of alkoxy (pentafluoro) cyclotriphosphazene and phenoxy (pentafluoro) cyclotriphosphazene.

3. The lithium secondary battery electrolyte according to claim 2, wherein a quantity of carbon atoms of alkoxy in the alkoxy (pentafluoro) cyclotriphosphazene is 1 to 20.

4. The lithium secondary battery electrolyte according to claim 3, wherein the alkoxy (pentafluoro) cyclotriphosphazene comprises one or more of methoxy (pentafluoro) cyclotriphosphazene and ethoxy (pentafluoro) cyclotriphosphazene.

5. The lithium secondary battery electrolyte according to claim 1, wherein the (pentafluoro) cyclotriphosphazene substituted by the electron withdrawing group comprises one or more of fluoroalkoxy (pentafluoro) cyclotriphosphazene and alkyl sulfonyl (pentafluoro) cyclotriphosphazene.

6. The lithium secondary battery electrolyte according to claim 5, wherein a quantity of carbon atoms of fluoroalkoxy in the fluoroalkoxy (pentafluoro) cyclotriphosphazene is 1 to 20.

7. The lithium secondary battery electrolyte according to claim 6, wherein the fluoroalkoxy (pentafluoro) cyclotriphosphazene comprises one or more of trifluoroethoxy (pentafluoro) cyclotriphosphazene and perfluorobutoxy (pentafluoro) cyclotriphosphazene.

8. The lithium secondary battery electrolyte according to claim 5, wherein a quantity of carbon atoms of alkyl sulfonyl in the alkyl sulfonyl (pentafluoro) cyclotriphosphazene is 1 to 20.

9. The lithium secondary battery electrolyte according to claim 8, wherein the alkyl sulfonyl (pentafluoro) cyclotriphosphazene comprises one or more of methyl sulfonyl (pentafluoro) cyclotriphosphazene and ethyl sulfonyl (pentafluoro) cyclotriphosphazene.

10. The lithium secondary battery electrolyte according to claim 1, wherein a mass percentage of the (pentafluoro) cyclotriphosphazene substituted by the electron donating group in the electrolyte is 10% to 30%.

11. The lithium secondary battery electrolyte according to claim 1, wherein a mass percentage of the (pentafluoro) cyclotriphosphazene substituted by the electron withdrawing group in the electrolyte is 1% to 5%.

12. The lithium secondary battery electrolyte according to claim 1, wherein a total mass percentage of the (pentafluoro) cyclotriphosphazene substituted by the electron donating group and the (pentafluoro) cyclotriphosphazene substituted by the electron withdrawing group in the electrolyte is 16% to 30%.

13. The lithium secondary battery electrolyte according to claim 1, wherein the electrolyte further comprises another additive, and the another additive comprises one or more of biphenyl, fluorobenzene, vinylene carbonate, trifluoromethyl vinylene carbonate, vinyl ethylene carbonate, 1,3-propane sultone, 1,4-butane sultone, vinyl sulfate, ethylene sulfite, succinonitrile, adiponitrile, 1,2-bis (2-cyanoethoxy) ethane, and 1,3,6-hexanetricarbonitrile.

14. The lithium secondary battery electrolyte according to claim 13, wherein a mass percentage of the another additive in the electrolyte is 0.1% to 20%.

15. The lithium secondary battery electrolyte according to claim 1, wherein the lithium salt comprises one or more of LiClO₄, LiBF₄, LiPF₆, LiAsF₆, LiPF₂O₂, LiCF₃SO₃, LiTDI, LiB(C₂O₄)₂ (LiBOB), LiBF₂C₂O₄ (LiDFOB), Li[(CF₃SO₂)₂N], Li[(FSO₂)₂N], and Li[(CₘF₂ₘ₊₁SO₂)(CₙF₂ₙ₊₁SO₂)N], and m and n are natural numbers.

16. The lithium secondary battery electrolyte according to claim 1, wherein a molarity of the lithium salt in the electrolyte is 0.01 mol/L to 2.0 mol/L.

17. The lithium secondary battery electrolyte according to claim 1, wherein the organic solvent comprises a carbonate solvent and/or a carboxylate solvent.

18. The lithium secondary battery electrolyte according to claim 17, wherein the carbonate solvent is a mixed solvent comprising cyclic carbonate and chain carbonate.

19. The lithium secondary battery electrolyte according to claim 18, wherein the cyclic carbonate comprises one or more of ethylene carbonate, propylene carbonate, fluoroethylene carbonate, gamma-butyrolactone, and butyl carbonate, and the chain carbonate comprises one or more of dimethyl carbonate, ethyl methyl carbonate, diethyl carbonate, and dipropyl carbonate.

20. The lithium secondary battery electrolyte according to claim 18, wherein a mass percentage of the cyclic carbonate in the electrolyte is 5% to 70%, and a mass percentage of the chain carbonate in the electrolyte is 5% to 70%.

21. The lithium secondary battery electrolyte according to claim 17, wherein the carboxylate solvent comprises one or more of methyl acetate, ethyl acetate, propyl acetate, butyl acetate, propyl propionate, and butyl propionate, and a mass percentage of the carboxylate solvent in the electrolyte is 5% to 30%.

22. A preparation method for a lithium secondary battery electrolyte, comprising the following steps:
in an argon-filled glove box, dissolving a fully dried lithium salt in an organic solvent, stirring and mixing the lithium salt and the organic solvent to form a homogeneous solution, adding, to the homogeneous solution, (pentafluoro) cyclotriphosphazene substituted by an electron donating group and (pentafluoro) cyclotriphosphazene substituted by an electron withdrawing group, and mixing the (pentafluoro) cyclotriphosphazene substituted by the electron donating group, the (pentafluoro) cyclotriphosphazene substituted by the electron withdrawing group, and the homogeneous solution homogeneously to obtain the lithium secondary battery electrolyte.

23. A lithium secondary battery, comprising a positive electrode, a negative electrode, a diaphragm, and an electrolyte, wherein the electrolyte is the lithium secondary battery electrolyte according to any one of claims 1 to 21.
